# EUROPEAN PATENT SPECIFICATION

(11) **EP 4 573 526 B1**
(45) Date of publication and mention of the grant of the patent: **01.07.2026**
(21) Application number: 23757295.3
(22) Date of filing: 18.08.2023
(51) Int. Cl.: G06V 20/52, G06V 10/82, G06V 10/764, G06V 40/20

(54) **ADAPTING A MACHINE LEARNING MODEL FOR DETERMINING INTENT OF A PERSON TO PASS THROUGH A DOOR**
ANPASSUNG EINES MASCHINENLERNMODELLS ZUR BESTIMMUNG DER ABSICHT EINER PERSON ZUM DURCHGANG DURCH EINE TÜR
ADAPTATION D'UN MODÈLE D'APPRENTISSAGE MACHINE POUR DÉTERMINER L'INTENTION D'UNE PERSONNE DE FRANCHIR UNE PORTE

(30) Priority: 18.08.2022 SE 2250975
(43) Date of publication of application: 25.06.2025
(73) Proprietor: ASSA ABLOY AB, 107 23 Stockholm (SE)
(72) Inventor: RYD, Gustav, 112 39 Stockholm (SE); PERNYER, Kenneth, 737 90 Ängelsberg (SE)
(74) Representative: Kransell & Wennborg KB
(86) International application number: PCT/EP2023/072780
(87) International publication number: WO 2024/038178

(56) References cited:
- US-A1- 2021 358 250
- US-B1- 11 157 734

## Description

### TECHNICAL FIELD

The present disclosure relates to the field of a machine learning (ML) model for determining intent of a person to pass through a door, and in particular to adapting such an ML model based on changes in a physical environment near the door.

### BACKGROUND

Automatic doors have been used for decades. Automatic doors use motors to open the door when a person approaches and wants to pass through. The doors can be sliding doors, swing doors or revolving doors. Automatic doors have the advantage that people do not need to use handles or muscle power to open the door. The user experience is convenient and there is an added advantage that the risk of spreading contaminants by touching surfaces when passing through a door is minimal.

Traditionally, active or passive infrared sensors have been used to detect when a person exhibits intent to pass through the door. Other sensors are also known. However such intent detection is not optimal. In some cases, the entering person needs to come very close to the door to signal intent to trigger the opening, resulting in wait time for the entering person for the door to open. In other cases, the sensor is too lenient and triggers opening when people walk past the door without having an intent to enter the door, which can lead to energy loss by climatised (heated or cooled) air escaping from a building housing the automatic door. US2021/358250A1 and US11157734B1 are relevant prior art documents.

It is known to evaluate trajectories of people to determine intent more accurately. However, how can such trajectory evaluation be updated to reflect a changing physical environment?

### SUMMARY

The invention is defined by the appended claims. One object is to improve how an ML model for determining intent to pass through a door adapts to a changing physical environment.

According to a first aspect, it is provided a method for adapting an intent model, being a machine learning, ML, model for determining intent of a person to pass through a door. The method being performed by an intent determiner. The method comprises: determining that a physical environment outside a door has changed; increasing a rate of training of the intent model, wherein the training is based on input features based on image data from an image capturing device covering an area near the door; and applying the intent model for inferring when a person exhibits intent to pass through the door, based on image data from the image capturing device.

The method may further comprise: triggering the door to open when the intent model infers intent to pass through the door.

The increasing a rate of training of the intent model may comprise: discarding a previously loaded intent model; and training a new intent model to replace the previously loaded intent model.

The increasing a rate of training of the intent model may comprise replacing the previous intent model with a new intent model that better corresponds to the determined physical environment.

The determining that a physical environment outside a door has changed may comprise determining that a physical environment outside a door has changed based on image data from the image capturing device.

The training may be based on a label derived from whether a person does or refrains from passing through the door.

The determining that a physical environment outside a door has changed may comprise: classifying at least one object in the image data; determining a position of each of the at least one object; creating a current object map comprising the at least one object and its respective position; and determining that a physical environment outside the door has changed when the current object map is sufficiently different from a corresponding previous object map.

The determining that a physical environment outside a door has changed may comprise determining a change in the physical environment that persists more than a threshold duration.

According to a second aspect, it is provided an intent determiner for adapting an intent model, being a machine learning, ML, model for determining intent of a person to pass through a door. The intent determiner comprises: a processor; and a memory storing instructions that, when executed by the processor, cause the intent determiner to: determine that a physical environment outside a door has changed; increase a rate of training of the intent model, wherein the training is based on input features based on image data from an image capturing device covering an area near the door; and apply the intent model for inferring when a person exhibits intent to pass through the door, based on image data from the image capturing device.

The intent determiner may further comprise: triggering the door to open when the intent model infers intent to pass through the door.

The instructions to increase a rate of training of the intent model may comprise instructions that, when executed by the processor, cause the intent determiner to: discard a previously loaded intent model; and train a new intent model to replace the previously loaded intent model.

The instructions to increase a rate of training of the intent model may comprise instructions that, when executed by the processor, cause the intent determiner to replace the previous intent model with a new intent model that better corresponds to the determined physical environment.

The instructions to determine that a physical environment outside a door has changed may comprise instructions that, when executed by the processor, cause the intent determiner to determine that a physical environment outside a door has changed based on image data from the image capturing device.

The training may be based on a label derived from whether a person does or refrains from passing through the door.

The instructions to determine that a physical environment outside a door has changed may comprise instructions that, when executed by the processor, cause the intent determiner to: classify at least one object in the image data; determine a position of each of the at least one object; create a current object map comprising the at least one object and its respective position; and determine that a physical environment outside the door has changed when the current object map is sufficiently different from a corresponding previous object map.

The instructions to determine that a physical environment outside a door has changed may comprise determining a change in the physical environment that persists more than a threshold duration.

According to a third aspect, it is provided a computer program for adapting an intent model, being a machine learning, ML, model for determining intent of a person to pass through a door. The computer program comprises computer program code which, when executed on an intent determiner causes the intent determiner to: determine that a physical environment outside a door has changed; increase a rate of training of the intent model, wherein the training is based on input features based on image data from an image capturing device covering an area near the door; and apply the intent model for inferring when a person exhibits intent to pass through the door, based on image data from the image capturing device.

According to a fourth aspect, it is provided a computer program product comprising a computer program according to the third aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram showing an environment in which embodiments presented herein can be applied;
Figs 2A-B are schematic top-view diagrams illustrating how trajectories of people can change based on physical obstacles in the vicinity of the door;
Figs 3A-C are flow charts illustrating methods for adapting an intent model, being a ML model for determining intent of a person to pass through a door;
Fig 4 is a schematic diagram illustrating components of the intent determiner of Fig 1; and
Fig 5 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, an intent model, being an ML model used for determining intent, is retrained when physical objects are detected that can alter a normal trajectory for a person wishing to pass through a door. The intent model determines intent based on trajectories of people, detected by an image capturing device. The trajectories are determined from image data from an image capturing device. When a changed physical environment is detected (based on image data), the intent model is adapted to increase its rate of training to quicker adapt and increase accuracy of the intent model.

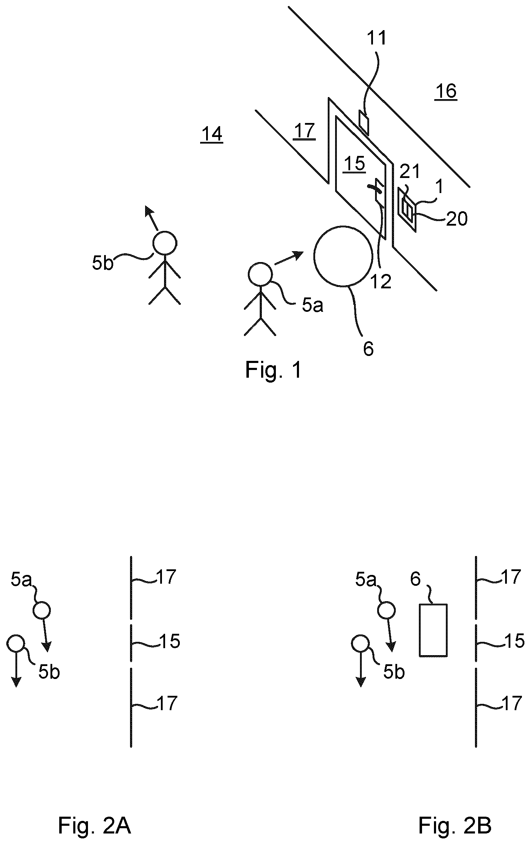

Fig 1 is a schematic diagram showing an environment in which embodiments presented herein can be applied, seen in a perspective view. Access to a physical space 16 is controlled by a door 15, which is optionally selectively unlockable. The door 15 stands between a first physical space 14 and a second physical space 16. The door 15 can be a swing door, sliding door (one-leaf or multiple leaves), revolving door, etc.

Optionally, in order to control access to the physical space 16, by selectively unlocking the door 15, an electronic lock 12 can be provided. In this case, the electronic lock 12 is controllable to be in a locked state or in an unlocked state. When the electronic lock 12 is in an unlocked state, the door 15 can be opened and when the electronic lock 12 is in a locked state, the door 15 cannot be opened. In this way, access to second physical space 16 can be controlled by the electronic lock 12. The electronic lock 12 can evaluate access of a person 5a-c by communicating with an electronic key (not shown) of the person 5a-c, and/or using biometrics. Alternatively or additionally, access through the door 12 can be controlled with a traditional, mechanical, lock.

In the example illustrated by Fig 1, there are two people 5a-b in the vicinity of the door 15. However, it is to be noted that embodiments presented herein are applicable for any number of people around the door 15.

An intent determiner 1 is provided for determining door operation of the door 15. This is based on a sequence of images (i.e. a video sequence) captured by an image capturing device 11, wherein the sequence of images is provided to the intent determiner 1. The image capturing device 11 can be a camera, radar, infrared sensor, time-of-flight (ToF) sensor etc. While only one image capturing device 11 is shown in Fig 1 in the first physical space 14, there can also be a corresponding image capturing device in the second physical space 16.

The intent determiner 1 comprises an intent model 20, being an ML model for determining intent of a person to pass through a door, based on the image data from the image capturing device 11. Alternatively, parts or all of the intent model 20 is provided by a server connected to the intent determiner 1 via a communication network, such as the Internet. The image data indicates a trajectory of movement for each user 5a-b, that can serve as a base for the intent model 20 to determine when there is intent (of at least one person) to open the door. The intent model 20 classifies the image data in at least two possible classes: there is intent of (at least) one person to pass through the door, or there is no intent of any person wishing to pass through the door.

When the intent determiner 1 determines that there is intent to pass through the door, the intent determiner 1 can signal a door opener (not shown) to open the door 15. Using the intent model 20, the intent determiner 1 achieves a balance between convenient door opening and reduced false openings (and any resulting energy loss).

However, in some cases, there may be a new or recently placed physical object 6 that acts as an obstacle for a person who wishes to pass through the door. The object 6 can e.g. be a newly installed bike rack, new signage for the building or a motor vehicle barrier. The object 6 may affect the trajectories of people wishing to pass through the door, which can lead to incorrect classifications of intent or not.

The intent determiner 1 optionally comprises an object classification model 21, which is an ML model for classifying the type of any physical 6 that can be identified based on the image data from the image capturing device 11. Alternatively, parts or all of the object classification model 21 is provided by a server connected to the intent determiner 1 via a communication network, such as the Internet.

The intent determiner 1 can be provided as a stand-alone device, or the intent determiner 1 can be integrated with the electronic lock 12, when provided, in which case the electronic lock 12 is a host device for the intent determiner 1.

Figs 2A-B are schematic top-view diagrams illustrating how trajectories of people can change based on physical obstacles in the vicinity of the door. A schematic top view is shown where people are here represented by circles. Arrows indicate a direction of movement. The position and direction (i.e. trajectory) of each person is determined based on a sequence of images captured by the image capturing device(s) 11 and analysed by the intent determiner 1.

In Fig 2A, there is a first person 5a and a second person 5b. Both people 5a-b are in movement to pass by the door 15 without entering. The intent determiner will use the image data from the image capturing device 11 to classify (i.e. infer) that there is no intent of any person to pass through the door.

In Fig 2B, a situation similar to that of Fig 2A is shown, but in Fig 2B, there is an object 6 acting as an obstacle for passing through the door 5. In this case, at the time of the example shown in Fig 2B, the historic trajectories of the people 5a-b are the same as in Fig 2B, but in this case, the first person 5a, might actually exhibit intent to pass through the door 15. This can e.g. be seen if the first user 5a has veered to the left to pass by the object 6.

If the intent model used for the example of Fig 2A is also employed for the example of Fig 2B, the intent of the first person 5a might be incorrectly classified as no intent to pass through the door. Hence, according to embodiments presented herein the intent determiner 1 increases a rate of training of the intent model 20 to faster adapt to the new physical environment.

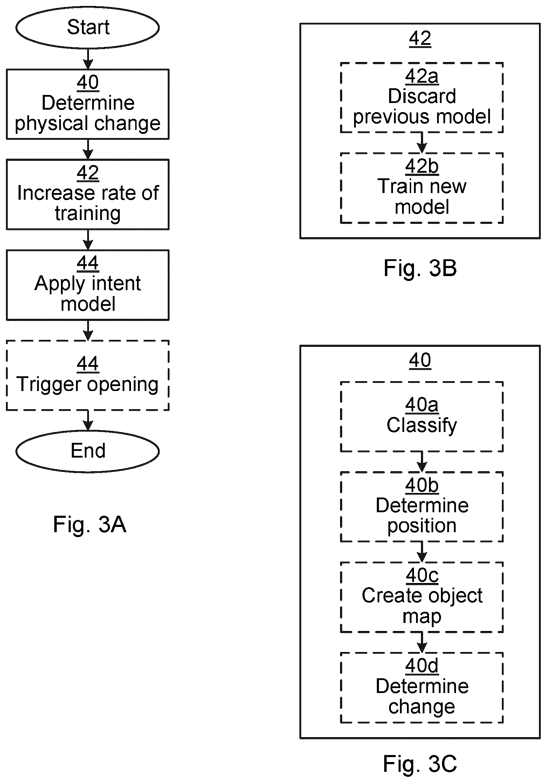

Figs 3A-C are flow charts illustrating methods for adapting an intent model 20, being a ML model for determining intent of a person to pass through a door 15. The intent model can e.g. be based on a lower layer comprising Multiple Object tracking (MOT) Visual Object Tracking (VOT), which in turn can be based on Convolutional Neural Network (CNN) and/or object detection technologies. Also pose (comprising position and direction) of people can be estimated. The intent model can also comprise a classification layer for classifying intent based on the lower layer, e.g. based on ML Classification (e.g. based on a CNN) or a regression model, e.g. based on Regression Neural Network technologies. When a regression model is used, the output can be applied to predict a probability of a person wanting to pass through the door. A probability threshold can then be applied, such that when the probability is greater than the (configurable or dynamically determined) probability threshold, it is determined that intent is sufficiently strong to be classified as intent to pass through the door. Alternatively, a regression model can be used to predict how long time it will take until there is the person want to pass through the door. When the predicted time is less than a (configurable or dynamically determined) threshold duration into the future, this can be classified as intent to pass through the door.

The method is performed by an intent determiner 1. The method can be performed for each image captured by the image capturing device(s), or once every n number of images that are captured by the image capturing device(s), where n is a configurable integer. The image(s) can be part of a sequence of images can forming a video sequence and can be of any suitable frame rate, where a higher frame rate results in greater accuracy and a lower frame rate results in lower resource (e.g. processor use, power use) usage.

In a *determine physical change* step 40, the intent determiner 1 determines that a physical environment outside a door has changed. This determination can be based on image data (including historic image data) from the image capturing device 11 to detect when a change has occurred. Alternatively or additionally, the determination of change can be based on people taking new trajectories for passing through the door and/or passing by the door. For instance, if almost all people avoid a certain area when approaching the door, that was not avoided before, that area is likely to have an object that acts as an obstacle. The evaluation of physical change can e.g. be based on a regression model. In this way we can distinguish between small and large changes of the environment and update the intent model training accordingly.

In one embodiment, the determining that a physical environment outside a door has changed comprises determining a change in the physical environment that persists more than a threshold duration. This prevents temporary transient changes from triggering adaptation of the intent model, e.g. when a bicycle or service vehicle is temporarily parked outside the door for a short period of time. Optionally, the duration depends on the type of object (e.g. classified using the object classification model 21, as described in more detail below).

In an *increase rate of training* step 42, the intent determiner 1 increases a rate of training of the intent model. The training can be unsupervised training of the intent model based on observations and derived labels. This training is repeated at a certain rate, wherein the rate is configurable, e.g. increased in this step. When the rate of training increases, training is more frequent and when the rate of training decreases, the training is less frequent. The training is based on input features based on image data from an image capturing device 11 covering an area near the door 15. The training can also be based on a label derived from detected actions of a person, i.e. based on detecting whether a person does or refrains from passing through the door. The training can be performed to train the lower layer. Alternatively or additionally, the training can be performed to train the classification layer. Alternatively, the training can be performed on the intent model as a whole.

In one embodiment, the intent determiner 1 replaces the previous intent model with a new intent model that better corresponds to the determined physical environment. For instance, it may be the case that an object in the form of a Christmas tree is placed in front of an entrance in December each year. When a similar object is detected in the month of December, an intent model from December of the preceding year can replace the currently loaded model, to adapt, more or less instantly, the intent model to the Christmas tree obstacle. Optionally, an intent model for another door of a similar scenario can be used as the replacement intent model.

By increasing the rate of training, more of the previous intent model is forgotten. This results in quicker adaptation of the intent model to the new physical environment. Compare with an intent model that is continuously trained; even if such an intent model would eventually result in an intent model that is adapted to the new physical environment, this will take much longer since for continuous training it is not desired to adjust a model only based on the most recent training.

In an *apply intent model* step 44, the intent determiner 1 applies the intent model for inferring when a person exhibits intent to pass through the door, based on image data from the image capturing device 11. The image data used as input comprises both current and historic image data, to capture person trajectories.

In an optional *trigger opening* step 46, the intent determiner 1 triggers the door 15 to open when the intent model infers intent to pass through the door. This can be performed by sending a command to open the door to a door controller of the door. Optionally, the door opening can also be conditional on an access control of the approaching person, e.g. based on an electronic key and/or biometrics.

It is to be noted that the intent model can subsequently be continuously trained, where any incorrect intent determination can be used as a training event. For instance, if intent is (incorrectly) not determined, and the user passes through the door (which can be opened by an explicit user intent using a push-button or IR beam), this is used as a training event to reduce the risk for such incorrect non-intent determination in the future. Similarly, if intent is (incorrectly) determined, and the user does not pass through the door, this is used as a training event to reduce the risk for such incorrect intent determination in the future.

Looking now to Fig 3B, this illustrates an embodiment of how the rate of training of the intent model can be increased in the *increase rate of training* step 42.

In optional *discard previous model* step 42a, the intent determiner 1 discards a previously loaded intent model.

In an optional *train new model* step 42b, the intent determiner 1 trains a new intent model to replace the previously loaded intent model. The new intent model can be completely blank or can be a predetermined base intent model.

Looking now to Fig 3C, this illustrates an embodiment of how the change of the physical environment can be determined in the *determine physical change* step 40.

In an optional *classify* step 40a, the intent determiner 1 classifies at least one object in the image data, e.g. using an object classification model 21, being an ML model trained to detect and classify different objects based on image data. The classification model 12 can e.g. be implemented using a convolutional neural network (CNN) as known in the art *per se.* The objects that are detected can be of different object types, such as bicycle rack, traffic barrier, bicycle, car, garbage can, signpost, Christmas tree, etc. This step can include to classify each object to a specific object type, e.g. based on a CNN trained to classify objects in images.

In an optional *determine position* step 40b, the intent determiner 1 determining 40b a position of each of the at least one object. Each position can be in a coordinate system of the image and/or mapped to a coordinate system of the real-world space, e.g. coordinates in a floor/ground plane.

In an optional *create object map* step 40c, the intent determiner 1 creates a current object map comprising the at least one object and its respective position. The object map is a data set (e.g. a collection of data constructs, where each data construct comprises an object classification and its position).

In a *determine change* step 40d, the intent determiner 1 determines that a physical environment outside the door has changed when the current object map is sufficiently different from a corresponding previous object map (from a previous iteration of the method).

For instance, the introduction or removal of an object (optionally with a size larger than a threshold size) can be sufficiently different. Alternatively or additionally, a movement of an object more than a threshold distance (in the coordinate system of the image or in a real-world coordinate system) can be sufficiently different.

Optionally, when the environment outside the door does not change for a long time (for a duration longer than a threshold duration), the rate of training is decreased in order not reduce resources consumption.

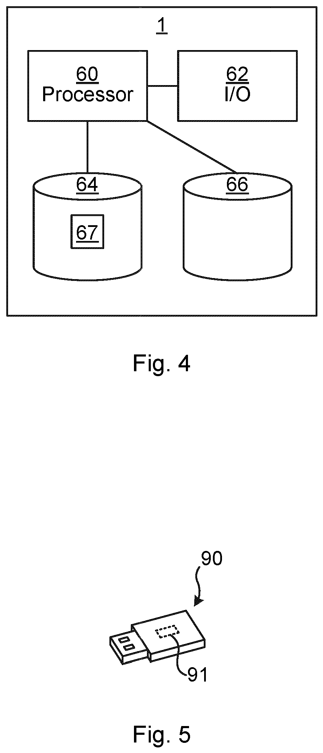

Fig 4 is a schematic diagram illustrating components of the intent determiner 1 of Fig 1. It is to be noted that when the intent determiner 1 is implemented in a host device, one or more of the mentioned components can be shared with the host device. A processor 60 is provided using any combination of one or more of a suitable central processing unit (CPU), graphics processing unit (GPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the methods described with reference to Figs 3A-C above.

The memory 64 can be any combination of random-access memory (RAM) and/or read-only memory (ROM). The memory 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

An I/O interface 62 is provided for communicating with external and/or internal entities using wired communication, e.g. based on Ethernet or Universal Serial Bus (USB), and/or wireless communication, e.g. Wi-Fi, and/or a cellular network, complying with any one or a combination of next generation mobile networks (fifth generation, 5G), LTE (Long Term Evolution), UMTS (Universal Mobile Telecommunications System) utilising W-CDMA (Wideband Code Division Multiplex), or any other current or future wireless network, as long as the principles described hereinafter are applicable.

Other components of the intent determiner 1 are omitted in order not to obscure the concepts presented herein.

Fig 5 shows one example of a computer program product 90 comprising computer readable means. On this computer readable means, a computer program 91 can be stored in a non-transitory memory. The computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 4. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for adapting an intent model (20), being a machine learning, ML, model for determining intent of a person to pass through a door (15), the method being performed by an intent determiner (1), the method comprising:
determining (40) that a physical environment outside a door has changed;
increasing (42), based on the determining that the physical environment outside the door has changed, a rate of training of the intent model (20), wherein the training is based on input features based on image data from an image capturing device (11) covering an area near the door (15); and
applying (44) the intent model (20) for inferring when a person exhibits intent to pass through the door, based on image data from the image capturing device (11);
wherein the determining (40) that a physical environment outside a door has changed comprises:
classifying (40a) at least one object in the image data;
determining (40b) a position of each of the at least one object;
creating (40c) a current object map comprising the at least one object and its respective position; and
determining (40d) that a physical environment outside the door has changed when the current object map is sufficiently different from a corresponding previous object map;
wherein the increasing (42) a rate of training of the intent model (20) comprises:
discarding (42a) a previously loaded intent model (20); and
training (42b) a new intent model (20) to replace the previously loaded intent model (20); or
the increasing (42) a rate of training of the intent model (20) comprises replacing the previous intent model (20) with a new intent model (20) that better corresponds to the determined physical environment.

2. The method according to claim 1, further comprising:
triggering (46) the door (15) to open when the intent model (20) infers intent to pass through the door.

3. The method according to any one of the preceding claims, wherein the training is based on a label derived from whether a person does or refrains from passing through the door.

4. The method according to any one of the preceding claims, wherein the determining (40) that a physical environment outside a door has changed comprises determining a change in the physical environment that persists more than a threshold duration.

5. An intent determiner (1) for adapting an intent model (20), being a machine learning, ML, model for determining intent of a person to pass through a door (15), the intent determiner (1) comprising:
a processor (60); and
a memory (64) storing instructions (67) that, when executed by the processor, cause the intent determiner (1) to:
determine that a physical environment outside a door has changed;
increase, based on the determining that the physical environment outside the door has changed, a rate of training of the intent model (20), wherein the training is based on input features based on image data from an image capturing device (11) covering an area near the door (15); and
apply the intent model (20) for inferring when a person exhibits intent to pass through the door, based on image data from the image capturing device (11)
wherein the instructions to determine that a physical environment outside a door has changed comprise instructions (67) that, when executed by the processor, cause the intent determiner (1) to:
classify at least one object in the image data;
determine a position of each of the at least one object;
create a current object map comprising the at least one object and its respective position; and
determine that a physical environment outside the door has changed when the current object map is sufficiently different from a corresponding previous object map;
wherein the instructions to increase a rate of training of the intent model (20) comprise instructions (67) that, when executed by the processor, cause the intent determiner (1) to:
discard a previously loaded intent model (20); and
train a new intent model (20) to replace the previously loaded intent model (20); or
the instructions to increase a rate of training of the intent model (20) comprise instructions (67) that, when executed by the processor, cause the intent determiner (1) to replace the previous intent model (20) with a new intent model (20) that better corresponds to the determined physical environment.

6. The intent determiner (1) according to claim 5, further comprising:
triggering (46) the door (15) to open when the intent model (20) infers intent to pass through the door.

7. The intent determiner (1) according to claim 5 or 6, wherein the training is based on a label derived from whether a person does or refrains from passing through the door.

8. The intent determiner (1) according to any one of claims 5 to 7, wherein the instructions to determine that a physical environment outside a door has changed comprises determining a change in the physical environment that persists more than a threshold duration.

9. A computer program (67, 91) for adapting an intent model (20), being a machine learning, ML, model for determining intent of a person to pass through a door (15), the computer program comprising computer program code which, when executed on an intent determiner (1) causes the intent determiner (1) to:
determine that a physical environment outside a door has changed;
increase, based on the determining that the physical environment outside the door has changed, a rate of training of the intent model (20), wherein the training is based on input features based on image data from an image capturing device (11) covering an area near the door (15); and
apply the intent model (20) for inferring when a person exhibits intent to pass through the door, based on image data from the image capturing device (11);
wherein the computer program code to determine that a physical environment outside a door has changed comprises computer program code which, when executed on an intent determiner (1) causes the intent determiner (1) to:
classify at least one object in the image data;
determine a position of each of the at least one object;
create a current object map comprising the at least one object and its respective position; and
determine that a physical environment outside the door has changed when the current object map is sufficiently different from a corresponding previous object map;
wherein the program code to increase a rate of training of the intent model (20) comprise program code to:
discard a previously loaded intent model (20); and
train a new intent model (20) to replace the previously loaded intent model (20); or
the program code to increase a rate of training of the intent model (20) comprise program code to replace the previous intent model (20) with a new intent model (20) that better corresponds to the determined physical environment.

10. A computer program product (64, 90) comprising a computer program according to claim 9 and a computer readable means comprising non-transitory memory in which the computer program is stored.

## Patentansprüche

1. Verfahren zum Anpassen eines Absichtsmodells (20), das ein maschinelles Lern-, ML-, Modell zum Bestimmen der Absicht einer Person ist, durch eine Tür (15) zu gehen, wobei das Verfahren von einem Absichtsbestimmer (1) durchgeführt wird, wobei das Verfahren umfasst:
Bestimmen (40), dass sich die physische Umgebung außerhalb einer Tür verändert hat;
Erhöhen (42), basierend auf dem Bestimmen, dass sich die physische Umgebung außerhalb der Tür verändert hat, einer Trainingsrate des Absichtsmodells (20), wobei das Training auf Eingabemerkmalen basiert, die auf Bilddaten einer Bildaufnahmevorrichtung (11) basieren, die einen Bereich in der Nähe der Tür (15) abdeckt; und
Anwenden (44) des Absichtsmodells (20) zum Ableiten, wann eine Person die Absicht zeigt, durch die Tür zu gehen, basierend auf Bilddaten der Bildaufnahmevorrichtung (11);
wobei das Bestimmen (40), dass sich die physische Umgebung außerhalb einer Tür verändert hat, umfasst:
Klassifizieren (40a) mindestens eines Objekts in den Bilddaten;
Bestimmen (40b) der Position jedes von dem mindestens einen Objekt;
Erstellen (40c) einer aktuellen Objektkarte, die das mindestens eine Objekt und seine jeweilige Position umfasst; und
Bestimmen (40d), dass sich die physische Umgebung außerhalb der Tür verändert hat, wenn sich die aktuelle Objektkarte hinreichend von einer entsprechenden vorherigen Objektkarte unterscheidet;
wobei das Erhöhen (42) der Trainingsrate des Absichtsmodells (20) umfasst:
Verwerfen (42a) eines zuvor geladenen Absichtsmodells (20); und
Trainieren (42b) eines neuen Absichtsmodells (20), um das zuvor geladene Absichtsmodell (20) zu ersetzen; oder
das Erhöhen (42) einer Trainingsrate des Absichtsmodells (20) Ersetzen des vorherigen Absichtsmodells (20) durch ein neues Absichtsmodell (20) umfasst, das der bestimmten physischen Umgebung besser entspricht.

2. Verfahren nach Anspruch 1, weiter umfassend:
Auslösen (46) der Öffnung der Tür (15), wenn das Absichtsmodell (20) die Absicht ableitet, durch die Tür zu gehen.

3. Verfahren nach einem der vorstehenden Ansprüche, wobei das Training auf einer Kennzeichnung basiert, die davon abgeleitet wird, ob eine Person durch die Tür geht oder darauf verzichtet.

4. Verfahren nach einem der vorstehenden Ansprüche, wobei das Bestimmen (40), dass sich eine physische Umgebung außerhalb einer Tür verändert hat, Bestimmen einer Veränderung der physischen Umgebung umfasst, die länger als eine Schwellendauer anhält.

5. Absichtsbestimmer (1) zum Anpassen eines Absichtsmodells (20), das ein maschinelles Lern-, ML-, Modell zum Bestimmen der Absicht einer Person ist, durch eine Tür (15) zu gehen, wobei der Absichtsbestimmer (1) umfasst:
einen Prozessor (60); und
einen Speicher (64), der Anweisungen (67) speichert, die, wenn sie vom Prozessor ausgeführt werden, den Absichtsbestimmer (1) veranlassen:
zu bestimmen, dass sich eine physische Umgebung außerhalb einer Tür verändert hat;
basierend auf dem Bestimmen, dass sich die physische Umgebung außerhalb der Tür verändert hat, eine Trainingsrate des Absichtsmodells (20) zu erhöhen, wobei das Training auf Eingabemerkmalen basiert, die auf Bilddaten einer Bildaufnahmevorrichtung (11) basieren, die einen Bereich in der Nähe der Tür (15) abdeckt; und
das Absichtsmodell (20) zum Ableiten anzuwenden, wann eine Person die Absicht zeigt, durch die Tür zu gehen, basierend auf Bilddaten der Bildaufnahmevorrichtung (11)
wobei die Anweisungen, um zu bestimmen, dass sich die physikalische Umgebung außerhalb einer Tür verändert hat, Anweisungen (67) umfassen, die, wenn sie vom Prozessor ausgeführt werden, den Absichtsbestimmer (1) veranlassen:
mindestens ein Objekt in den Bilddaten zu klassifizieren;
die Position jedes von dem mindestens einen Objekt zu bestimmen;
eine aktuelle Objektkarte zu erstellen, die das mindestens eine Objekt und seine jeweilige Position umfasst; und
zu bestimmen, dass sich die physische Umgebung außerhalb der Tür verändert hat, wenn sich die aktuelle Objektkarte hinreichend von einer entsprechenden vorherigen Objektkarte unterscheidet;
wobei die Anweisungen, um die Trainingsrate des Absichtsmodells (20) zu erhöhen, Anweisungen (67) umfassen, die, wenn sie vom Prozessor ausgeführt werden, den Absichtsbestimmer (1) veranlassen:
ein zuvor geladenes Absichtsmodell (20) zu verwerfen; und
ein neues Absichtsmodell (20) zu trainieren, um das zuvor geladene Absichtsmodell (20) zu ersetzen; oder
die Anweisungen, um eine Trainingsrate des Absichtsmodells (20) zu erhöhen, Anweisungen (67) umfassen, die, wenn sie vom Prozessor ausgeführt werden, den Absichtsbestimmer (1) veranlassen, das vorherige Absichtsmodell (20) durch ein neues Absichtsmodell (20) zu ersetzen, das der bestimmten physischen Umgebung besser entspricht.

6. Der Absichtsbestimmer (1) nach Anspruch 5, weiter umfassend:
Auslösen (46) der Öffnung der Tür (15), wenn das Absichtsmodell (20) die Absicht ableitet, durch die Tür zu gehen.

7. Absichtsbestimmer (1) nach Anspruch 5 oder 6, wobei das Training auf einer Kennzeichnung basiert, die davon abgeleitet wird, ob eine Person durch die Tür geht oder darauf verzichtet.

8. Absichtsbestimmer (1) nach einem der Ansprüche 5 bis 7, wobei die Anweisungen, um zu bestimmen, dass sich eine physische Umgebung außerhalb einer Tür verändert hat, Bestimmen einer Veränderung der physischen Umgebung umfasst, die länger als eine Schwellendauer anhält.

9. Computerprogramm (67, 91) zum Anpassen eines Absichtsmodells (20), das ein maschinelles Lern-, ML-, Modell zum Bestimmen der Absicht einer Person ist, durch eine Tür (15) zu gehen, wobei das Computerprogramm einen Computerprogrammcode umfasst, der, wenn er auf einem Absichtsbestimmer (1) ausgeführt wird, den Absichtsbestimmer (1) veranlasst:
zu bestimmen, dass sich eine physische Umgebung außerhalb einer Tür verändert hat;
basierend auf dem Bestimmen, dass sich die physische Umgebung außerhalb der Tür verändert hat, eine Trainingsrate des Absichtsmodells (20) zu erhöhen, wobei das Training auf Eingabemerkmalen basiert, die auf Bilddaten einer Bildaufnahmevorrichtung (11) basieren, die einen Bereich in der Nähe der Tür (15) abdeckt; und
das Absichtsmodell (20) zum Ableiten anzuwenden, wann eine Person die Absicht zeigt, durch die Tür zu gehen, basierend auf Bilddaten der Bildaufnahmevorrichtung (11);
wobei der Computerprogrammcode, um zu bestimmen, dass sich die physische Umgebung außerhalb einer Tür verändert hat, einen Computerprogrammcode umfasst, der, wenn er auf einem Absichtsbestimmer (1) ausgeführt wird, den Absichtsbestimmer (1) veranlasst:
mindestens ein Objekt in den Bilddaten zu klassifizieren;
die Position jedes von dem mindestens einen Objekt zu bestimmen;
eine aktuelle Objektkarte zu erstellen, die das mindestens eine Objekt und seine jeweilige Position umfasst; und
zu bestimmen, dass sich die physische Umgebung außerhalb der Tür verändert hat, wenn sich die aktuelle Objektkarte hinreichend von einer entsprechenden vorherigen Objektkarte unterscheidet;
wobei der Programmcode, um eine Trainingsrate des Absichtsmodells (20) zu erhöhen, einen Programmcode umfasst, um:
ein zuvor geladenes Absichtsmodell (20) zu verwerfen; und
ein neues Absichtsmodell (20) zu trainieren, um das zuvor geladene Absichtsmodell (20) zu ersetzen; oder
der Programmcode, um die Trainingsrate des Absichtsmodells (20) zu erhöhen, einen Programmcode umfasst, um das vorherige Absichtsmodell (20) durch ein neues Absichtsmodell (20) zu ersetzen, das der bestimmten physischen Umgebung besser entspricht.

10. Computerprogrammprodukt (64, 90), umfassend ein Computerprogramm nach Anspruch 9 und ein computerlesbares Mittel, umfassend einen nichtflüchtigen Speicher, in dem das Computerprogramm gespeichert ist.

## Revendications

1. Procédé d'adaptation d'un modèle d'intention (20), étant un modèle d'apprentissage automatique, ML, permettant de déterminer l'intention d'une personne de franchir une porte (15), le procédé étant réalisé par un dispositif de détermination d'intention (1), le procédé comprenant :
la détermination (40) qu'un environnement physique à l'extérieur d'une porte a changé ;
l'augmentation (42), sur la base de la détermination que l'environnement physique à l'extérieur de la porte a changé, d'une vitesse d'entraînement du modèle d'intention (20), dans lequel l'entraînement est basé sur des caractéristiques d'entrée basées sur des données d'image provenant d'un dispositif de capture d'image (11) couvrant une zone proche de la porte (15) ; et
l'application (44) du modèle d'intention (20) permettant de déduire quand une personne manifeste l'intention de franchir la porte, sur la base des données d'image provenant du dispositif de capture d'image (11) ;
dans lequel la détermination (40) qu'un environnement physique à l'extérieur d'une porte a changé comprend :
la classification (40a) d'au moins un objet dans les données d'image ;
la détermination (40b) de la position de chacun des au moins un objet ;
la création (40c) d'une carte d'objets actuelle comprenant le au moins un objet et sa position respective ; et
la détermination (40d) qu'un environnement physique à l'extérieur de la porte a changé lorsque la carte d'objets actuelle est suffisamment différente d'une carte d'objets précédente correspondante ;
dans lequel l'augmentation (42) d'une vitesse d'entraînement du modèle d'intention (20) comprend :
la suppression (42a) d'un modèle d'intention (20) précédemment chargé ; et
l'entraînement (42b) d'un nouveau modèle d'intention (20) pour remplacer le modèle d'intention (20) précédemment chargé ; ou
l'augmentation (42) d'une vitesse d'entraînement du modèle d'intention (20) comprend le remplacement du modèle d'intention (20) précédent par un nouveau modèle d'intention (20) qui correspond mieux à l'environnement physique déterminé.

2. Procédé selon la revendication 1, comprenant en outre :
le déclenchement (46) de l'ouverture de la porte (15) lorsque le modèle d'intention (20) déduit l'intention de franchir la porte.

3. Procédé selon l'une quelconque des revendications précédentes, dans lequel l'entraînement est basé sur une étiquette dérivée du fait qu'une personne franchisse ou non la porte.

4. Procédé selon l'une quelconque des revendications précédentes, dans lequel la détermination (40) qu'un environnement physique à l'extérieur d'une porte a changé comprend la détermination d'un changement dans l'environnement physique qui persiste pendant plus d'une durée seuil.

5. Dispositif de détermination d'intention (1) permettant d'adapter un modèle d'intention (20), étant un modèle d'apprentissage automatique , ML, pour déterminer l'intention d'une personne de franchir une porte (15), le dispositif de détermination d'intention (1) comprenant :
un processeur (60) ; et
une mémoire (64) stockant des instructions (67) qui, lorsqu'elles sont exécutées par le processeur, amènent le dispositif de détermination d'intention (1) à :
déterminer qu'un environnement physique à l'extérieur d'une porte a changé ;
augmenter, sur **la** base de la détermination que l'environnement physique à l'extérieur de la porte a changé, une vitesse d'entraînement du modèle d'intention (20), dans lequel l'entraînement est basé sur des caractéristiques d'entrée basées sur des données d'image provenant d'un dispositif de capture d'image (11) couvrant une zone proche de la porte (15) ; et
appliquer le modèle d'intention (20) permettant de déduire quand une personne manifeste l'intention de franchir la porte, sur la base des données d'image provenant du dispositif de capture d'image (11) ;
dans lequel les instructions permettant de déterminer qu'un environnement physique à l'extérieur d'une porte a changé comprennent des instructions (67) qui, lorsqu'elles sont exécutées par le processeur, amènent le dispositif de détermination d'intention (1) à :
classer au moins un objet dans les données d'image ;
déterminer la position de chacun des au moins un objet ;
créer une carte d'objets actuelle comprenant le au moins un objet et sa position respective ; et
déterminer qu'un environnement physique à l'extérieur de la porte a changé lorsque la carte d'objets actuelle est suffisamment différente d'une carte d'objets précédente correspondante ;
dans lequel les instructions visant à augmenter une vitesse d'entraînement du modèle d'intention (20) comprennent des instructions (67) qui, lorsqu'elles sont exécutées par le processeur, amènent le dispositif de détermination d'intention (1) à :
supprimer un modèle d'intention (20) précédemment chargé ; et
entraîner un nouveau modèle d'intention (20) à remplacer le modèle d'intention (20) précédemment chargé ; ou
les instructions visant à augmenter une vitesse d'entraînement du modèle d'intention (20) comprennent des instructions (67) qui, lorsqu'elles sont exécutées par le processeur, amènent le dispositif de détermination d'intention (1) à remplacer le modèle d'intention (20) précédent par un nouveau modèle d'intention (20) qui correspond mieux à l'environnement physique déterminé.

6. Dispositif de détermination d'intention (1) selon la revendication 5, comprenant en outre :
le déclenchement (46) de l'ouverture de la porte (15) lorsque le modèle d'intention (20) déduit l'intention de franchir la porte.

7. Dispositif de détermination d'intention (1) selon la revendication 5 ou 6, dans lequel l'entraînement est basé sur une étiquette dérivée du fait qu'une personne franchisse ou non la porte.

8. Dispositif de détermination d'intention (1) selon l'une quelconque des revendications 5 à 7, dans lequel les instructions permettant de déterminer qu'un environnement physique à l'extérieur d'une porte a changé comprennent la détermination d'un changement dans l'environnement physique qui persiste pendant plus d'une durée seuil.

9. Programme informatique (67, 91) permettant d'adapter un modèle d'intention (20), étant un modèle d'apprentissage automatique, ML, pour déterminer l'intention d'une personne de franchir une porte (15), le programme informatique comprenant un code de programme informatique qui, lorsqu'il est exécuté sur un dispositif de détermination d'intention (1), amène le dispositif de détermination d'intention (1) à :
déterminer qu'un environnement physique à l'extérieur d'une porte a changé ;
augmenter, sur la base de la détermination que l'environnement physique à l'extérieur de la porte a changé, une vitesse d'entraînement du modèle d'intention (20), dans lequel l'entraînement est basé sur des caractéristiques d'entrée basées sur des données d'image provenant d'un dispositif de capture d'image (11) couvrant une zone proche de la porte (15) ; et
appliquer le modèle d'intention (20) permettant de déduire quand une personne manifeste l'intention de franchir la porte, sur la base des données d'image provenant du dispositif de capture d'image (11) ;
dans lequel le code de programme informatique permettant de déterminer qu'un environnement physique à l'extérieur d'une porte a changé comprend un code de programme informatique qui, lorsqu'il est exécuté sur un dispositif de détermination d'intention (1), amène le dispositif de détermination d'intention (1) à :
classer au moins un objet dans les données d'image ;
déterminer la position de chacun des au moins un objet ;
créer une carte d'objets actuelle comprenant le au moins un objet et sa position respective ; et
déterminer qu'un environnement physique à l'extérieur de la porte a changé lorsque la carte d'objets actuelle est suffisamment différente d'une carte d'objets précédente correspondante ;
dans lequel le code de programme visant à augmenter une vitesse d'entraînement du modèle d'intention (20) comprend un code de programme pour :
supprimer un modèle d'intention (20) précédemment chargé ; et
entraîner un nouveau modèle d'intention (20) à remplacer le modèle d'intention (20) précédemment chargé ; ou
le code de programme visant à augmenter une vitesse d'entraînement du modèle d'intention (20) comprend un code de programme pour remplacer le modèle d'intention (20) précédent par un nouveau modèle d'intention (20) qui correspond mieux à l'environnement physique déterminé.

10. Produit de programme informatique (64, 90) comprenant un programme informatique selon la revendication 9 et un moyen lisible par ordinateur comprenant une mémoire non transitoire dans laquelle le programme informatique est stocké.
